# DEMANDE DE BREVET EUROPEEN

(11) **EP 0 522 909 A1**
(43) Date de publication de la demande: **13.01.1993**
(21) Numéro de dépôt: 92401751.0
(22) Date de dépôt: 23.06.1992
(51) Int. Cl.: H02K 11/00, H02P 5/00

(54) **Dispositif motorisé comportant une génératrice tachymétrique configurable en moteur de secours**

(30) Priorité: 09.07.1991 FR 9108602
(71) Demandeur: THOMSON-CSF, 75008 Paris (FR)
(72) Inventeur: Guyomard, Patrick, F-92045 Paris la Défense (FR); Audion, Marc, F-92045 Paris la Défense (FR); Rambaud, Jean, F-92045 Paris la Défense (FR); Rivière, Philippe, F-92045 Paris la Défense (FR)
(74) Mandataire: Lepercque, Jean

(57) **Abrégé**

La présente invention concerne un dispositif motorisé à génératrice tachymétrique configurable en moteur de secours. Ce dispositif est destiné à l'entraînement d'un organe mobile. Il comporte : un moteur électrique (1) à rotor (6, 23) et à bobine d'alimentation (7, 26) associé à un capteur tachymétrique (2) induisant un courant électrique dans au moins une bobine électrique (5, 27), un circuit de régulation (8) contrôlant la vitesse et la position du moteur électrique (1) en fonction du signal d'asservissement délivré par ladite bobine électrique (5) et appliqué à la bobine d'alimentation (7, 26). Ce dispositif comporte en outre des moyens pour assurer la poursuite de l'entraînement de l'organe mobile en cas de défaillance du moteur électrique ou de son alimentation électrique Ces moyens pour poursuivre l'entraînement de l'organe mobile sont constitués par un circuit de détection de panne (16) qui commande, en cas de panne, des moyens de commutation (13) pour assurer la connexion de la bobine électrique (5) du capteur tachymétrique à une source d'alimentation électrique (14).

Application : Amélioration de la sécurité d'un mécanisme motorisé.

## Description

La présente invention concerne un dispositif motorisé destiné à l'entraînement d'un organe mobile comportant un moteur électrique entraînant une génératrice tachymétrique, configurable en moteur de secours. Un tel dispositif motorisé est classiquement couplé à un circuit de régulation qui contrôle la vitesse et la position du moteur électrique en fonction du signal d'asservissement délivré par la bobine électrique du capteur tachymétrique.

Lorsque les exigences de sécurité sont particulièrement contraignantes, par exemple dans le domaine de l'aéronautique, dans le domaine spatial ou dans des domaines industriels tels que la production d'énergie nucléaire, l'Homme de Métier prévoit habituellement une redondance des fonctions critiques en doublant voire en triplant certains composants. Cette méthode est certes éprouvée et de conception relativement aisée, mais elle se traduit en contrepartie par une augmentation de poids préjudiciable pour certaines applications, par un accroissement significatif de l'encombrement et bien sûr par un surcoût. En outre, la gestion des composants et systèmes redondants entraîne une complexité croissante du contrôle des fonctions à sécuriser.

Le but de la présente invention est de remédier à ces inconvénients en proposant un dispositif motorisé dont la probabilité de panne est sensiblement identique à celle d'un dispositif de l'art antérieur doté d'un moteur de secours, et dont le coût de fabrication, le poids et l'encombrement sont sensiblement moindres.

La présente invention concerne un dispositif motorisé à génératrice tachymétrique configurable en moteur de secours, ce dispositif étant destiné à l'entraînement d'un organe mobile, et étant du type comportant un moteur électrique à rotor et bobine d'alimentation, associé à un capteur tachymétrique induisant un courant électrique dans au moins une bobine électrique, un circuit de régulation contrôlant la vitesse et/ou la position du moteur électrique en fonction du signal d'asservissement délivré par ladite bobine électrique et appliqué à la bobine d'alimentation. Le dispositif comporte des moyens pour assurer la poursuite de l'entraînement de l'organe mobile en cas de défaillance du moteur électrique ou de son alimentation électrique, lesdits moyens étant constitués par un circuit de détection de panne qui commande, en cas de panne, des moyens de commutation pour assurer la connexion de la bobine électrique du capteur tachymétrique à une source d'alimentation électrique.

Le principe de l'invention consiste donc à utiliser la génératrice tachymétrique en moteur de secours en cas de défaillance du moteur principal ou de son réseau d'alimentation.

Selon un mode de réalisation préféré, le circuit de contrôle assure en outre la déconnexion du moteur électrique en cas de défaillance du moteur principal ou de son alimentation. Ce mode de réalisation permet d'éviter les perturbations du système de sécurité lorsque le moteur principal présente un fonctionnement anormal mais continue à fournir un couple moteur ou un couple de freinage.

Selon une variante, le circuit comporte en outre des moyens pour arrêter l'entraînement de l'organe mobile par le capteur tachymétrique lorsque l'organe mobile occupe une position de repos prédéterminée. Selon ce mode de réalisation, on évite la situation dans laquelle l'organe mobile reste dans une position dangereuse ou inopportune en cas de panne du moteur, de l'étage de régulation, dans le circuit d'alimentation principal et au niveau des connections. Le dispositif selon la présente variante a pour but d'assurer à l'organe mobile un positionnement de sécurité correspondant par exemple à une mise en butée ou à l'arrêt en une position quelconque constante ou évoluant en fonction de certains paramètres, tels que l'amplitude des vibrations et des mouvements du reste de l'équipement.

Avantageusement, la connexion de la bobine électrique à une alimentation électrique en fonction d'un signal délivré par un organe de détection de pannes est assurée par un relais électrique.

La bobine de relais pourra être insérée dans le circuit d'alimentation du moteur principal. Ainsi, une rupture de l'alimentation provoquera le basculement du relais en position de repos dans laquelle il assure l'alimentation électrique de la bobine tachymétrique et éventuellement la déconnexion de la bobine du moteur principal. Bien entendu, il est également possible de prévoir une commande plus élaborée du relais, mettant par exemple en oeuvre un module électronique de détection de défaillances multiples ou un logiciel d'auto-surveillance d'un système complexe.

Selon un mode de réalisation particulier, le moteur électrique comporte un rotor et un capteur tachymétrique intégré constitué par une bobine électrique détectant les variations de flux induites par un rotor présentant une pluralité de parties polaires adjacentes aimantées en sens alternés.

Ce mode de réalisation permet d'éviter une liaison mécanique entre le moteur principal et le capteur tachymétrique, de réduire le coût de fabrication et le poids ainsi que l'encombrement du dispositif en évitant de doubler certaines parties communes au moteur principal et au capteur, tels que le rotor ou le stator.

Selon un mode de réalisation particulier, la structure mobile est en forme de disque comportant des zones aimantées transversalement.

Selon un autre mode de réalisation particulier, la structure mobile est de forme tubulaire et présente des zones aimantées radialement.

L'invention sera mieux comprise à la lecture de la description qui suit concernant des modes de réalisation particuliers faisant référence aux dessins annexés où:
- la figure 1 représente une vue schématique du dispositif selon l'invention;
- la figure 2 représente un vue en coupe d'un mode de réalisation particulier.
- la figure 3 représente une vue de face de la structure statorique munie de ces bobines.

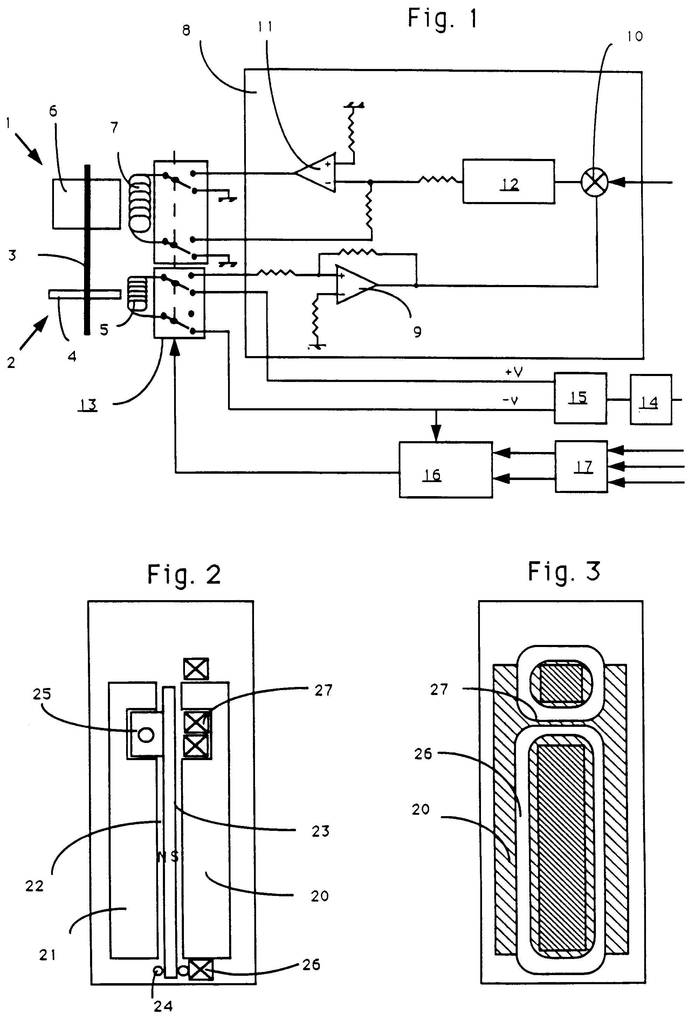

Le dispositif motorisé représenté schématiquement en figure 1, comporte un moteur (1) et un capteur tachymétrique (2) accouplés par un axe (3). Le capteur tachymétrique (2) comporte un rotor (4) induisant un courant électrique dans la bobine (5) lorsqu'il est entraîné par l'axe d'accouplement (3).

Le moteur (1) comporte également un rotor (6) associé à des bobines (7) créant une force électromotrice lorsqu'elles sont alimentées.

En fonctionnement normal, la bobine (7) du moteur électrique (1) est alimentée par un circuit d'asservissement (8) constitué par un amplificateur de puissance rebouclé en courant. Le circuit d'asservissement (8) reçoit une tension provenant de la bobine (5) du capteur tachymétrique (2). Cette tension est appliquée à l'entrée d'un amplificateur opérationnel (9). Un sommateur (10) réalise le rebouclage de l'information issue du capteur tachymétrique (2). Un deuxième amplificateur opérationnel (11) génère la tension d'alimentation de la bobine (7) du moteur électrique (1) après traitement du signal issu du sommateur (10) par un circuit correcteur (12). La connexion de la bobine (7) du moteur (1) avec la sortie du circuit d'asservissement (8) d'une part, et de la bobine (5) du capteur tachymétrique (2) avec l'entrée du circuit d'asservissement (8) d'autre part, se fait par l'intermédiaire d'un relais (13). En cas d'absence de panne, ce relais met en contact la bobine (7) du moteur électrique (1) avec la sortie du circuit d'asservissement (8), ainsi que la bobine (5) du capteur tachymétrique (2) avec l'entrée du circuit d'asservissement (8).

En cas de fonctionnement anormal, c'est-à-dire en cas de panne du moteur électrique (1) ou de son alimentation, le relais (13) bascule dans la position représentée en figure 1, correspondant à une position de repos, dans laquelle la bobine (7) du moteur électrique (1) est mise à la masse de façon à supprimer tout couple moteur provenant du moteur électrique (1).

Par ailleurs, la bobine (5) est mise en liaison avec une alimentation de secours (14) indépendante de l'alimentation principale. Le capteur tachymétrique se transforme en conséquence en un moteur électrique. Un circuit de commande (15) contrôle les mouvements engendrés par le capteur tachymétrique, par exemple en fonction d'informations provenant d'un détecteur de butée.

Le relais (13) est commandé par un circuit de détection de panne. Ce circuit de détection de panne (16) provoque le passage en position de repos du relais (13) lorsque les signaux arrivant sur un circuit d'interface (17) font apparaître une défaillance au niveau de l'alimentation principal du moteur électrique (1), de son circuit de régulation d'asservissement (8) ou du moteur électrique (1) lui-même. Les informations peuvent provenir de cartes, de boîtiers ou modules de contrôle, ou tous logiciels d'auto-surveillance habituellement mis en oeuvre.

La figure 2 représente une vue en coupe d'un exemple particulier de réalisation. Le dispositif est constitué par un moteur à rotor plat, assurant un mouvement linéaire.

Le dispositif comprend deux parties statoriques (20, 21) délimitant un entrefer (22) à l'intérieur duquel se déplace un rotor (23) selon une direction perpendiculaire au plan de coupe de la figure 2. Ce rotor (23) est constitué par au moins un aimant mince présentant deux zones aimantées en sens opposé (N et S). Il est guidé à une extrémité par des roulements à billes (24) et à l'autre extrémité par une tige de guidage (25) assurant par ailleurs l'entraînement de l'organe mobile auquel le dispositif est associé.

La structure statorique (20) comporte une bobine principale (26) assurant le positionnement du rotor ainsi que son déplacement. Une deuxième bobine électrique (27) de plus petite taille génère une tension d'asservissement. En cas de défaillance du moteur électrique ou de son alimentation, la bobine (27) peut être mise en liaison avec une source d'alimentation de secours par l'intermédiaire d'un relais, comme représenté sur la figure 1, ou par tout autre moyen de commutation approprié connu par l'homme de l'art.

La figure 3 représente une vue de face de la structure statorique. Le stator (20) présente des logements pour la mise en place des bobines électriques (26, 27).

Le dispositif selon la présente invention trouve de nombreuses applications, en particulier dans le domaine de l'aéronautique où les besoins de sécurité sont importants et où les contraintes de poids sont critiques. Les applications concernent en particulier tout dispositif de commande de mécanisme intervenant dans le fonctionnement de l'avion. Plus spécialement les équipements optroniques, qui d'une part sont de plus en plus nombreux dans les aéronefs tels que avion et hélicoptère, et d'autre part interviennent de façon croissante pour des fonctions de base du pilotage.

A titre d'exemple, on peut citer la motorisation de l'excroissance sur le nez de l'avion destinée à abriter des équipements optroniques. Cette excroissance est de préférence escamotable pour les phases d'atterrissage au sol ou d'appontage sur un porte-avion. Il est évident que pour des raisons de sécurité, l'excroissance escamotable doit se retrouver en position abaissée en cas de défaillance du moteur d'entraînement ou de son alimentation. Le dispositif selon l'invention permet de résoudre de façon optimale et fiable ce problème.

Un autre exemple d'application concerne les viseurs de casque destinés aux pilotes d'hélicoptère. Dans le cas du pilotage de nuit, le viseur de casque projette sur l'oeil du pilote une image issue d'un capteur monté sur la plate-forme de pilotage. En cas de défaillance de la plate-forme de pilotage, il est impératif que celle-ci revienne à une position de visée dans l'axe et qu'elle y reste afin de permettre un pilotage avec vision axiale. Pour assurer l'entraînement mécanique du système de visée et garantir le retour en position axiale en cas de panne, le dispositif selon l'invention est particulièrement adapté.

Une autre application concerne les équipements optroniques tels que la motorisation des mouvements de miroirs ou de lentilles sur le trajet optique, de volets de protection ou de mécanismes de calibration. En cas de panne, il est préférable que l'élément mobile puisse être repositionné sur une butée afin que le senseur puisse continuer à recevoir les rayons optiques permettant de délivrer un signal exploitable, même si les conditions ne sont plus optimales. La motorisation de tels organes est avantageusement assurée par les dispositifs selon l'invention.

Ces exemples d'applications ne sont pas limitatifs et il existe de nombreux autres domaines industriels, comme ceux de la robotique ou de la machine outil où la sécurité des opérateurs ou plus simplement la sécurité du procédé de fabrication en cours sont critiques.

L'Homme du Métier sera par ailleurs à même de réaliser de nombreuses variantes de l'invention sans pour autant sortir du cadre de la protection. En particulier, il sera à même de réaliser de nombreuses variantes de moteurs électriques intégrant une bobine susceptible d'assurer une fonction tachymétrique en mode normal et une fonction moteur en cas de défaillance du moteur principal. De même, l'homme du métier sera susceptible de réaliser de nombreuses variantes d'accouplement d'un moteur et d'un capteur propre à la mise en oeuvre de l'invention.

## Revendications

**1 -** Dispositif motorisé à génératrice tachymétrique configurable en moteur de secours, ce dispositif étant destiné à l'entraînement d'un organe mobile, et étant du type comportant un moteur électrique (1) à rotor (6, 23) et à bobine d'alimentation (7, 26) associé à un capteur tachymétrique (2) induisant un courant électrique dans au moins une bobine électrique (5, 27), un circuit de régulation (8) contrôlant la vitesse et la position du moteur électrique (1) en fonction du signal d'asservissement délivré par ladite bobine électrique (5) et appliqué à la bobine d'alimentation (7, 26), le dispositif comportant en outre des moyens pour assurer la poursuite de l'entraînement de l'organe mobile en cas de défaillance du moteur électrique ou de son alimentation électrique, caractérisé en ce que lesdits moyens pour poursuivre l'entraînement de l'organe mobile sont constitués par un circuit de détection de panne (16) qui commande, en cas de panne, des moyens de commutation (13) pour assurer la connexion de la bobine électrique (5) du capteur tachymétrique à une source d'alimentation électrique (14).

**2 -** Dispositif motorisé selon la revendication 1 caractérisé en ce que ledit moyen de commutation (13) assure en outre la déconnexion du moteur électrique (1) en cas de défaillance dudit moteur (1) ou de son alimentation.

**3 -** Dispositif motorisé selon la revendication 1 ou 2 caractérisé en ce que les moyens de poursuite de l'entraînement de l'organe mobile comportent en outre des moyens pour arrêter l'entraînement de l'organe mobile par le capteur tachymétrique (2) lorsque l'organe mobile occupe une position de repos prédéterminée.

**4 -** Dispositif motorisé selon l'une quelconque des revendications précédentes caractérisé en ce que les moyens de commutation sont constitués par un relais électrique (13) assurant la connexion de la bobine électrique (5) du capteur tachymétrique (2) à une alimentation électrique (14) en fonction d'un signal délivré par l'organe de détection de pannes (16).

**5 -** Dispositif motorisé selon l'une quelconque des revendications précédentes caractérisé en ce que le moteur électrique comporte un capteur tachymétrique intégré constitué par une bobine électrique (27) détectant les variations de flux induites par un rotor (23) présentant une pluralité de parties polaires adjacentes aimantées en sens alternés.

**6 -** Dispositif motorisé selon la revendication 5 caractérisé en ce que le rotor est constitué par une structure mobile comprenant une partie aimantée perpendiculairement à son déplacement, ladite structure étant mobile à l'intérieur d'un entrefer (22) délimité par des pièces statoriques (20, 21)comportant au moins une bobine électrique d'excitation et au moins une seconde bobine électrique, des moyens de commutation (13) commandés par des moyens de détection de panne (16) mettant ladite seconde bobine (27) en liaison avec une source d'alimentation en cas de disfonctionnement du circuit électrique comportant la première bobine (26) et dans le cas contraire mettant la seconde bobine (27) en liaison avec le circuit d'asservissement.

**7 -** Dispositif motorisé selon la revendication 6 caractérisé en ce que ladite structure mobile est de type plane, le mouvement d'entraînement étant de type linéaire.

**8 -** Dispositif motorisé selon la revendication 6 caractérisé en ce que la structure mobile est en forme de disque comportant des zones aimantées transversalement.

**9 -** Dispositif motorisé selon la revendication 6 caractérisé en ce que la structure mobile est de forme tubulaire et présente des zones aimantées radialement.
